# EUROPEAN PATENT SPECIFICATION

(11) **EP 3 232 715 B1**
(45) Date of publication and mention of the grant of the patent: **29.07.2020**
(21) Application number: 16199606.1
(22) Date of filing: 18.11.2016
(51) Int. Cl.: H04W 48/16, H04W 8/14, H04W 84/12, H04W 12/04, H04W 12/06, H04W 12/08, H04W 8/00, H04W 48/20, H04W 88/08

(54) **METHOD AND APPARATUS FOR ACCESSING WIRELESS ACCESS POINT**
VERFAHREN UND VORRICHTUNG FÜR ZUGRIFF AUF EINEN DRAHTLOSEN ZUGRIFFSPUNKT
PROCÉDÉ ET APPAREIL D'ACCÈS DE POINTS D'ACCÈS SANS FIL

(30) Priority: 14.04.2016 CN 201610230550
(43) Date of publication of application: 18.10.2017
(73) Proprietor: Beijing Xiaomi Mobile Software Co., Ltd., Beijing 100085 (CN)
(72) Inventor: MENG, Deguo, Beijing, Beijing 100085 (CN); DING, Yi, Beijing, Beijing 100085 (CN); HOU, Enxing, Beijing, Beijing 100085 (CN)
(74) Representative: Jeffrey, Philip Michael

(56) References cited:
- CN-A- 104 283 642
- CN-A- 104 703 176
- CN-A- 104 703 252
- US-A1- 2011 182 204
- US-A1- 2013 231 151
- US-A1- 2013 237 148
- US-A1- 2015 139 025
- US-A1- 2015 223 154
- US-A1- 2016 255 661

## Description

### TECHNICAL FIELD

The present disclosure generally relates to technical field of communication, and more particularly, to a method and apparatus for accessing a wireless access point.

### BACKGROUND

At present, many smart devices are capable of using a Wireless-Fidelity (Wi-Fi) function. However, since most of the smart devices have no keyboard or display screen being able to display a Service Set Identifier (SSID) of a wireless router, in general, such smart devices cannot directly access the wireless router.

One accessing method provided by the related art includes: after accessing a wireless router, a mobile phone unicasting a SSID and an access password of the wireless router, and then a smart device accessing the wireless router according to the SSID and the access password unicasted by the mobile phone.

Since the SSID has no standard coding format, when a coding format of the SSID of the wireless router is different from that of an SSID defaulted by the mobile phone, the mobile phone may automatically convert the coding format of the SSID of the wireless router into the coding format of the SSID defaulted by the mobile phone. In this way, after the mobile phone unicasts the coded SSID to the smart device, and the smart device tries to access the wireless router according to the SSID and the access password unicasted by the mobile phone, the wireless router cannot recognize the converted SSID, i.e., the smart device cannot successfully be connected to the wireless router.

US 2013/0231151 is concerned with probe request and response exchange.

CN 104703176 is concerned with a configuration method of a wireless network, intelligent terminal and wireless network equipment.

US 2015/0223154 is concerned with an active search method in a wireless LAN system.

CN 104283642 is concerned with a method for issuing a service set identifier (SSID) in a wireless local area network. US2011/182204 is concerned with a communication device and method for controlling the same.

### SUMMARY

In order to overcome the problems existing in the related art, embodiments of the present disclosure provide a method and apparatus for accessing a wireless access point. The technical solutions are as follows.

According to a first aspect of the embodiments of the present disclosure, there is provided a method as claimed in claim 1.

Alternatively, the unicasting the device finding information according to the BSSID includes:
unicasting a probe request carrying the BSSID.

Alternatively, the receiving the feedback information sent by the wireless access point includes:
receiving a probe response sent by the wireless access point.

According to a second aspect of the embodiments of the present disclosure, there is provided a method as claimed in claim 4.

According to a third aspect of the embodiments of the present disclosure, there is provided a system as claimed in claim 5.

Alternatively, the unicasting module is further configured to unicast a probe request carrying the BSSID.

Alternatively, the second receiving module is further configured to receive a probe response sent by the wireless access point.

According to a fourth aspect of the embodiments of the present disclosure, there is provided a system as claimed in claim 8.

According to embodiments of the present disclosure, there is provided an apparatus for accessing a wireless access point, including:
a processor; and
a memory for storing instructions executable by the processor;
wherein the processor is configured to perform the method of claim 1.

According to embodiments of the present disclosure, there is provided an apparatus for accessing a wireless access point, including:
a processor; and
a memory for storing instructions executable by the processor;
wherein the processor is configured to perform the method of claim 4.

The present invention also provides a computer program comprising instructions, which when the program is executed by a processor of a smart device, cause the smart device to perform the above method.

The present invention also provides a computer program comprising instructions, which when the program is executed by a processor of a preset device, cause the preset device to perform the above method.

The technical solutions provided by the embodiments of the present disclosure may have the following beneficial effects.

By receiving the BSSID and the access password broadcasted by the preset device, and unicasting the device finding information according to the received BSSID, then sending the feedback information by a wireless access device after receiving the device finding information, the feedback information containing an original SSID of the wireless access point, the smart device may access the wireless access point according to the original SSID in the feedback information and the access password received in the past, thereby solving the problem that the smart device cannot successfully be connected to the wireless router due to that the SSID received by the smart device cannot be recognized by the wireless router, and achieving the technical effect that the smart device can successfully be connected to the wireless router.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic diagram showing an implementation environment involved by a method for accessing a wireless access point, according to a part of exemplary embodiments.
Fig. 2 is a flow chart showing a method for accessing a wireless access point, according to an exemplary embodiment.
Fig. 3 is a flow chart showing a method for accessing a wireless access point, according to another exemplary embodiment.
Fig. 4A is a flow chart showing a method for accessing a wireless access point, according to another exemplary embodiment.
Fig. 4B is a flow chart showing another method for accessing a wireless access point, according to another exemplary embodiment.
Fig. 5 is a block diagram illustrating an apparatus for accessing a wireless access point, according to an exemplary embodiment.
Fig. 6 is a block diagram illustrating another apparatus for accessing a wireless access point, according to an exemplary embodiment.
Fig. 7 is a block diagram illustrating an apparatus for accessing a wireless access point, according to another exemplary embodiment.
Fig. 8 is a block diagram illustrating another apparatus for accessing a wireless access point, according to another exemplary embodiment.
Fig. 9 is a block diagram illustrating an apparatus for accessing a wireless access point, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

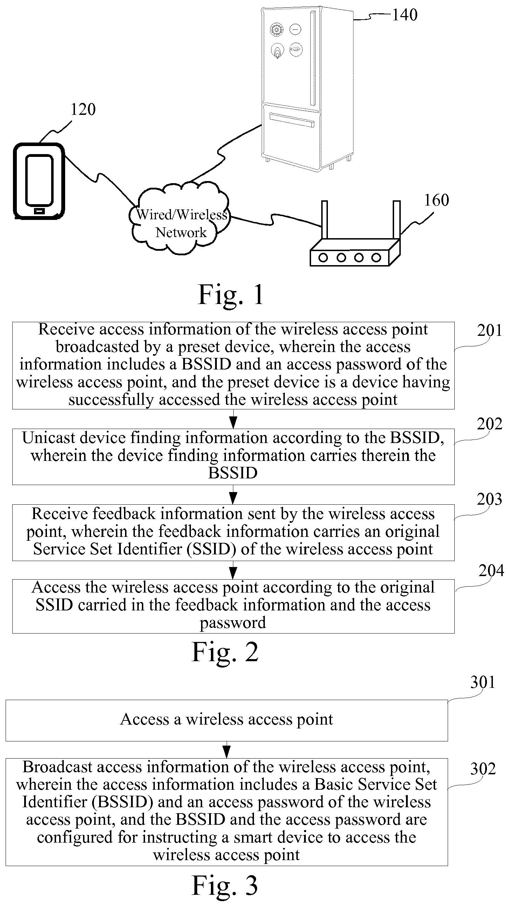

Fig. 1 is a schematic diagram showing an implementation environment involved by a method for accessing a wireless access point, according to a part of exemplary embodiments. As shown in Fig. 1, the implementation environment may include a preset device 120, a smart device 140 and a wireless access device 160.

The preset device 120 may be a mobile phone, a tablet computer, an e-book reader, a laptop computer, and the like. The preset device 120 may be connected with the wireless access device 160 via Wi-Fi, and the preset device 120 may be connected with the smart device 140 via Bluetooth, Near Field Communication (NFC), or Zigzag Flying of Bees (Zigbee).

The smart device 140 may be a smart air conditioner, a smart TV, a smart refrigerator, an air purifier, a smart electric cooker, a smart heater, and the like. The smart device 140 may be connected with the wireless access device 160 via Bluetooth, NFC, Zigbee or Wi-Fi. In an actual implementation, the smart device 140 may be one, or may be more than one.

The wireless access device 160 may be a wireless router.

Fig. 2 is a flow chart showing a method for accessing a wireless access point, according to an exemplary embodiment. In the present embodiment, the explanations are given by using an example in which the method is applied in the smart device shown in Fig. 1. As shown in Fig. 2, the method may include the following steps.

In step 201, access information of the wireless access point broadcasted by a preset device is received, wherein the access information includes a Basic Service Set Identifier (BSSID) and an access password of the wireless access point, and the preset device is a device having successfully accessed the wireless access point.

In step 202, device finding information is unicasted according to the BSSID, wherein the device finding information carries therein the BSSID.

In step 203, feedback information sent by the wireless access point is received, wherein the feedback information carries therein an original Service Set Identifier (SSID) of the wireless access point.

In step 204, the wireless access point is accessed according to the original SSID carried in the feedback information and the access password.

Alternatively, the unicasting the device finding information according to the BSSID includes:
unicasting a probe request carrying the BSSID.

Alternatively, the receiving the feedback information sent by the wireless access point includes:
receiving a probe response sent by the wireless access point.

Alternatively, the access information further includes a SSID of the wireless access point broadcasted by the preset device; and before unicasting the device finding information according to the BSSID, the method further includes:
detecting whether the SSID in the access information contains a preset character, wherein the preset character is a character having different coding formats; and
if the preset character is contained, performing the step of unicasting the device finding information according to the BSSID.

In conclusion, in the method for accessing a wireless access point provided by the present embodiment, the BSSID and the access password broadcasted by the preset device are received, the device finding information is unicasted according to the received BSSID, the wireless access device sends the feedback information after receiving the device finding information, the feedback information containing an original SSID of the wireless access point, thereafter, the smart device may access the wireless access point according to the original SSID in the feedback information and the access password received in the past, thereby solving the problem in the related art that the smart device cannot successfully be connected to the wireless router due to that the SSID received by the smart device cannot be recognized by the wireless router, and achieving the technical effect that the smart device can successfully be connected to the wireless router.

Fig. 3 is a flow chart showing a method for accessing a wireless access point, according to another exemplary embodiment. In the present embodiment, the explanations are given by using an example in which the method is applied in the preset device shown in Fig. 1. As shown in Fig. 3, the method may include the following steps.

In step 301, a wireless access point is accessed.

In step 302, access information of the wireless access point is broadcasted, wherein the access information includes a Basic Service Set Identifier (BSSID) and an access password of the wireless access point, and the BSSID and the access password are configured for instructing a smart device to access the wireless access point.

Alternatively, before broadcasting the access information of the wireless access point, the method further includes:
detecting whether a Service Set Identifier (SSID) of the wireless access point contains a preset character, wherein the preset character is a character having different coding formats; and
if the preset character is contained, performing the step of broadcasting the access information of the wireless access point.

In conclusion, in the method for accessing a wireless access point provided by the present embodiment, the access information of the wireless access point is broadcasted after accessing the wireless access point, the access information carrying therein a BSSID and an access password, in this way, after receiving the access information, the smart device may access the wireless access point according to the received BSSID and the access password, thereby solving the problem in the related art that the smart device cannot successfully be connected to the wireless router due to that the SSID received by the smart device cannot be recognized by the wireless router, and achieving the technical effect that the smart device can successfully be connected to the wireless router.

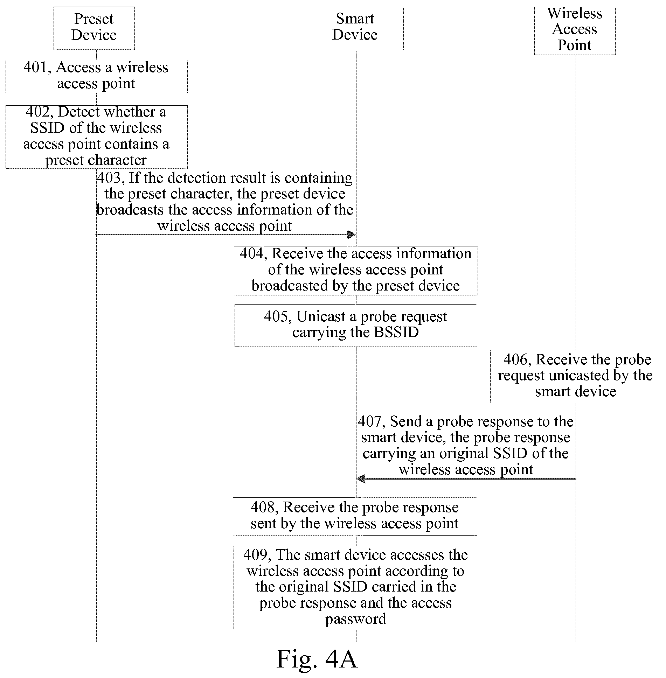

Fig. 4A is a flow chart showing a method for accessing a wireless access point, according to another exemplary embodiment. In the present embodiment, the explanations are given by using an example in which the method is applied in the implementation environment shown in Fig. 1. As shown in Fig. 4A, the method may include the following steps.

In step 401, a preset device accesses a wireless access point.

In the present embodiment, the explanations are given by using a wireless router as the wireless access point, and using a mobile phone as the preset device.

The mobile phone may search SSIDs of respective nearby wireless routers, exhibit an interface containing the searched respective SSIDs, receive a selection signal of selecting a certain SSID from the interface by a user, receive an access password of the SSID inputted by the user, and access the wireless router according to the SSID and the received access password.

In step 402, the preset device detects whether the SSID of the wireless access point contains a preset character.

The preset character is a character having different coding formats. For example, a Chinese character generally has two coding formats of UTF-8 and GBK, then the mobile phone may detect whether the stored SSID of the wireless router which has been accessed by it contains the Chinese character.

In step 403, if a detection result is containing the preset character, the preset device broadcasts the access information of the wireless access point.

If a detection result of the mobile phone is that the SSID of the wireless router contains the preset character, it indicates that the coding format of the SSID in the mobile phone may be different from the coding format of the original SSID of the wireless router, at this time, the mobile phone may broadcast the access information containing the BSSID of the wireless router and the access password. Alternatively, the access information may further include a SSID of the wireless router, which is not limited by the present embodiment.

If a detection result is that no preset character is contained, it indicates that the coding format of the SSID in the mobile phone is the same as the coding format of the original SSID of the wireless router, then after the mobile phone broadcasts the existing SSID and the access password, the smart device may successfully be connected to the wireless router according to the SSID and the access password, thereby at this time, the mobile phone may broadcast the SSID of the wireless router and the access password, which is not elaborated by the present embodiment.

Alternatively, after receiving a trigger signal from a user, the mobile phone may broadcast the access information. For example, when the user desires to make a refrigerator of his/her house access the wireless router, the user may trigger the mobile phone to broadcast the access information.

In step 404, the smart device receives the access information of the wireless access point sent by the preset device.

In step 405, the smart device unicasts a probe request carrying the BSSID.

In step 406, the wireless access point receives the probe request unicasted by the smart device.

After the smart device unicasts the probe request, respective devices nearby the smart device may receive the probe request, wherein, respective devices may include the wireless router corresponding to the BSSID.

In step 407, the wireless access point sends a probe response to the smart device, wherein the probe response carries therein an original SSID of the wireless access point.

After receiving the probe request, the respective devices may read an identification carried in the probe request, and when the read identification is an identification of one device itself, this device may feedback the probe response to the smart device. Thereby, when the wireless router receives the probe request and reads that the BSSID in the probe request is the BSSID of itself, the wireless router may feedback the probe response to the smart device. The probe response may carry therein an original SSID of the wireless router. The original SSID in the present embodiment indicates an SSID which may be recognized by the wireless router, and an SSID having the same coding format with the SSID stored in the wireless router.

In step 408, the smart device receives a probe response sent by the wireless access point.

In step 409, the smart device accesses the wireless access point according to the original SSID carried in the probe response and the access password.

After receiving the probe response, the smart device may read the original SSID carried in the probe response, and then access the wireless router according to the read original SSID and the access password in the access information received previously.

In an application scenario, when the user needs to connect the air conditioner of his/her house to the wireless router, he/she may connect the mobile phone to the wireless router at first, and after successfully accessing the wireless router, he/she may trigger the mobile phone to broadcast the BSSID and the wireless password of the wireless router. After receiving the information broadcasted by the mobile phone, the air conditioner in the house unicasts device finding information according to the received BSSID, and when the wireless router intercepts that the BSSID unicasted by the air conditioner is the BSSID of the wireless router itself, the wireless router sends feedback information to the air conditioner, the feedback information carrying therein an original SSID of the wireless router, then the air conditioner may successfully be connected to the wireless router according to the original SSID in the feedback information and the wireless password broadcasted by the mobile phone previously.

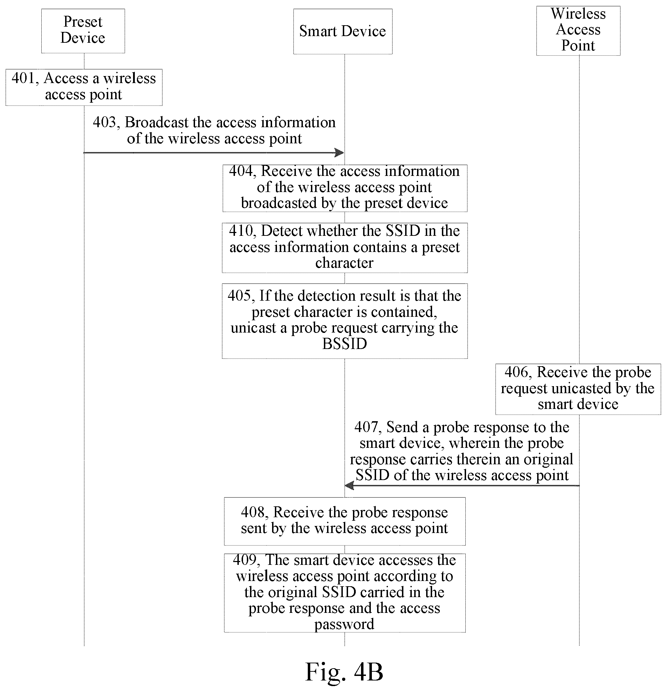

In addition, the step 402 in the above embodiment is an optional step, and in an actual implementation, the preset device may directly perform the step 403. At this time, the step 403 may be accordingly replaced by that the preset device broadcasts the access information of the wireless access point. Moreover, when the access information broadcasted by the preset device includes the SSID, the BSSID, and the access password at the same time, as shown in Fig. 4B, before the step 405, the method may further include the following steps.

In step 410, the smart device detects whether the SSID in the access information contains a preset character.

The preset character is a character having different coding formats. This step is similar to the step 402 in the above embodiment.

Accordingly, the step 405 may be replaced by: if a detection result is that the preset character is contained, the smart device unicasts a probe request carrying therein the BSSID.

If a detection result is that the preset character is contained, it indicates that the coding format of the received SSID may be different from the coding format of the original SSID of the wireless router, then the smart device may not access the wireless router according to the received SSID, thereby at this time, the smart device may unicast a probe request carrying the BSSID.

If a detection result is that the preset character is not contained, it indicates that the coding format of the received SSID is the same as the coding format of the original SSID of the wireless router, then the smart device may directly access the wireless router, thereby at this time, the smart device accesses the wireless access point according to the SSID in the access information and the access password, which is not elaborated by the present embodiment.

In conclusion, in the method for accessing a wireless access point provided by the present embodiment, the BSSID and the access password broadcasted by the preset device is received, the device finding information is unicasted according to the received BSSID, the wireless access device sends the feedback information after receiving the device finding information, the feedback information containing an original SSID of the wireless access point, thereafter, the smart device may access the wireless access point according to the original SSID in the feedback information and the access password received at past; thereby solving the problem in the related art that the smart device cannot successfully be connected to the wireless router due to that the SSID received by the smart device cannot be recognized by the wireless router, and achieving the technical effect that the smart device can successfully be connected to the wireless router.

In the above embodiments, the steps relating to the preset device side may be separately implemented as the method for accessing a wireless access point at the preset device side, the steps relating to the smart device side may be separately implemented as the method for accessing a wireless access point at the smart device side, and the steps relating to the wireless access point side may be separately implemented as the method for accessing a wireless access point at the wireless access point side.

Hereinafter, the apparatus embodiments of the present disclosure for performing the method embodiments of the present disclosure are described. For details not disclosed in the apparatus embodiments of the present disclosure, the method embodiments of the present disclosure may be referred to.

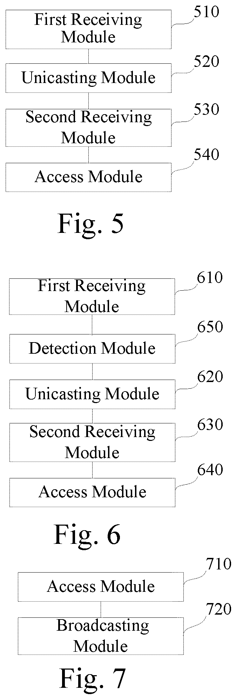

Fig. 5 is a block diagram illustrating an apparatus for accessing a wireless access point, according to an exemplary embodiment. The apparatus may be implemented as a whole or a part of the smart device 140 in the implementation environment shown in Fig. 1 by hardware, software, or a combination thereof. The apparatus may include: a first receiving module 510, a unicasting module 520, a second receiving module 530, and an access module 540.

The first receiving module 510 is configured to receive access information of the wireless access point broadcasted by a preset device, the access information including a Basic Service Set Identifier (BSSID) and an access password of the wireless access point, and the preset device being a device having successfully accessed the wireless access point.

The unicasting module 520 is configured to unicast device finding information according to the BSSID received by the first receiving module 510, the device finding information carrying therein the BSSID.

The second receiving module 530 is configured to receive feedback information sent by the wireless access point, the feedback information carrying therein an original Service Set Identifier (SSID) of the wireless access point.

The access module 540 is configured to access the wireless access point according to the original SSID carried in the feedback information received by the second receiving module 530 and the access password received by the first receiving module 510.

In conclusion, in the apparatus for accessing a wireless access point provided by the present embodiment, the BSSID and the access password broadcasted by the preset device are received, the device finding information is unicasted according to the received BSSID, the wireless access device sends the feedback information after receiving the device finding information, the feedback information containing an original SSID of the wireless access point, thereafter, the smart device may access the wireless access point according to the original SSID in the feedback information and the access password received in the past, thereby solving the problem in the related art that the smart device cannot successfully be connected to the wireless router due to that the SSID received by the smart device cannot be recognized by the wireless router, and achieving the technical effect that the smart device can successfully be connected to the wireless router.

Fig. 6 is a block diagram illustrating another apparatus for accessing a wireless access point, according to an exemplary embodiment. The apparatus may be implemented as a whole or a part of the smart device 140 in the implementation environment shown in Fig. 1 by hardware, software, or a combination thereof. The apparatus may include: a first receiving module 610, a unicasting module 620, a second receiving module 630, and an access module 640.

The first receiving module 610 is configured to receive access information of the wireless access point broadcasted by a preset device, the access information including a Basic Service Set Identifier (BSSID) and an access password of the wireless access point, and the preset device being a device having successfully accessed the wireless access point.

The unicasting module 620 is configured to unicast device finding information according to the BSSID received by the first receiving module 610, the device finding information carrying therein the BSSID.

The second receiving module 630 is configured to receive feedback information sent by the wireless access point, the feedback information carrying therein an original Service Set Identifier (SSID) of the wireless access point.

The access module 640 is configured to access the wireless access point according to the original SSID carried in the feedback information received by the second receiving module 630 and the access password received by the first receiving module 610.

Alternatively, the unicasting module 620 is further configured to unicast a probe request carrying the BSSID.

After the smart device unicasts the probe request, respective devices nearby the smart device may receive the probe request, wherein, respective devices may include the wireless router corresponding to the BSSID.

Alternatively, the second receiving module 630 is further configured to receive a probe response sent by the wireless access point.

After receiving the probe request, the respective devices may read an identification carried in the probe request, and when the read identification is an identification of one device itself, this device may feedback a probe response to the smart device. Thereby, when the wireless router receives the probe request and reads that the BSSID in the probe request is the BSSID of itself, the wireless router may feedback the probe response to the smart device. Accordingly, the smart device may receive the probe response via the second receiving module 630. The probe response may carry therein an original SSID of the wireless router. The original SSID in the present embodiment indicates an SSID which may be recognized by the wireless router, and an SSID having the same coding format with the SSID stored in the wireless router.

In a possible implementation, the access information further includes an SSID of the wireless access point broadcasted by the preset device; and the apparatus further includes: a detection module 650.

The detection module 650 is configured to, before unicasting the device finding information according to the BSSID by the unicasting module 620, detect whether the SSID in the access information contains a preset character, the preset character being a character having different coding formats.

The unicasting module 620 is configured to, if a detection result of the detection module 650 is that the preset character is contained, perform the step of unicasting the device finding information according to the BSSID.

If a detection result is that the preset character is contained, it indicates that the coding format of the received SSID may be different from the coding format of the original SSID of the wireless router, then the smart device may not access the wireless router according to the received SSID, thereby at this time, the smart device may unicast a probe request carrying the BSSID via the unicasting module 620.

If a detection result is that the preset character is not contained, it indicates that the coding format of the received SSID is the same as the coding format of the original SSID of the wireless router, then the smart device may directly access the wireless router, thereby at this time, the smart device accesses the wireless access point according to the SSID in the access information and the access password, which is not elaborated by the present embodiment.

In conclusion, in the apparatus for accessing a wireless access point provided by the present embodiment, the BSSID and the access password broadcasted by the preset device is received, the device finding information is unicasted according to the received BSSID, the wireless access device sends the feedback information after receiving the device finding information, the feedback information containing an original SSID of the wireless access point, thereafter, the smart device may access the wireless access point according to the original SSID in the feedback information and the access password received at past; thereby solving the problem in the related art that the smart device cannot successfully be connected to the wireless router due to that the SSID received by the smart device cannot be recognized by the wireless router, and achieving the technical effect that the smart device can successfully be connected to the wireless router.

Fig. 7 is a block diagram illustrating an apparatus for accessing a wireless access point, according to another exemplary embodiment. The apparatus may be implemented as a whole or a part of the preset device 120 in the implementation environment shown in Fig. 1 by hardware, software, or a combination thereof. The apparatus may include: an access module 710, and a broadcasting module 720.

The access module 710 is configured to access a wireless access point.

The broadcasting module 720 is configured to broadcast access information of the wireless access point, the access information including a Basic Service Set Identifier (BSSID) and an access password of the wireless access point, and the BSSID and the access password being configured for instructing a smart device to access the wireless access point.

In conclusion, in the apparatus for accessing a wireless access point provided by the present embodiment, after successfully accessing the wireless access point, the access information of the wireless access point is broadcasted to the smart device, then the smart device may access the wireless access point according to the BSSID in the received access information and the access password, thereby solving the problem in the related art that the smart device cannot successfully be connected to the wireless router due to that the SSID received by the smart device cannot be recognized by the wireless router, and achieving the technical effect that the smart device can successfully be connected to the wireless router.

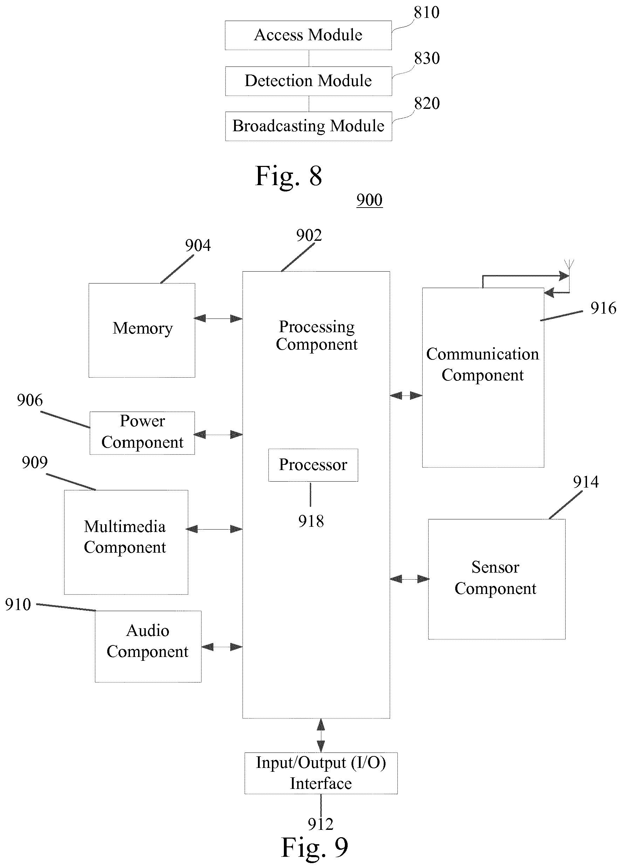

Fig. 8 is a block diagram illustrating another apparatus for accessing a wireless access point, according to another exemplary embodiment. The apparatus may be implemented as a whole or a part of the preset device 120 in the implementation environment shown in Fig. 1 by hardware, software, or a combination thereof. The apparatus may include: an access module 810, and a broadcasting module 820.

The access module 810 is configured to access a wireless access point.

In the present embodiment, the explanations are given by using a wireless router as the wireless access point, and using a mobile phone as the preset device.

The mobile phone may search SSIDs of respective nearby wireless routers, exhibit an interface containing the searched respective SSIDs, receive a selection signal of selecting a certain SSID from the interface by a user, receive an access password of the SSID inputted by the user, and access the wireless router according to the SSID and the received access password.

The broadcasting module 820 is configured to broadcast access information of the wireless access point, the access information including a Basic Service Set Identifier (BSSID) and an access password of the wireless access point, and the BSSID and the access password being configured for instructing a smart device to access the wireless access point.

Alternatively, the apparatus further includes: a detection module 830.

The detection module 830 is configured to, before the broadcasting module 820 sends the access information of the wireless access point to the smart device, detect whether a Service Set Identifier (SSID) of the wireless access point contains a preset character, the preset character being a character having different coding formats.

The broadcasting module 820 is configured to, if a detection result of the detection module 830 is that the preset character is contained, perform the step of broadcasting the access information of the wireless access point.

If a detection result of the mobile phone is that the SSID of the wireless router contains the preset character, it indicates that the coding format of the SSID in the mobile phone may be different from the coding format of the original SSID of the wireless router, at this time, the mobile phone may broadcast the access information containing the BSSID of the wireless router and the access password via the broadcasting module 820. Alternatively, the access information may further include an SSID of the wireless router, which is not limited by the present embodiment.

If a detection result is that no preset character is contained, it indicates that the coding format of the SSID in the mobile phone is the same as the coding format of the original SSID of the wireless router, then after the mobile phone broadcasts the existing SSID and the access password, the smart device may successfully be connected to the wireless router according to the SSID and the access password, thereby at this time, the mobile phone may broadcast the SSID of the wireless router and the access password, which is not elaborated by the present embodiment.

In conclusion, in the apparatus for accessing a wireless access point provided by the present embodiment, after successfully accessing the wireless access point, the access information of the wireless access point is broadcasted to the smart device, then the smart device may access the wireless access point according to the BSSID in the received access information and the access password, thereby solving the problem in the related art that the smart device cannot successfully be connected to the wireless router due to that the SSID received by the smart device cannot be recognized by the wireless router, and achieving the technical effect that the smart device can successfully be connected to the wireless router.

When the apparatus provided by the above embodiments implements the function of accessing the wireless access point, illustrative explanations are given by using the above division of respective functional modules. In an actual application, the above functions may be assigned to be accomplished by different functional modules according to actual needs, i.e., the content structure of the device is divided into different functional modules for achieving all of or a part of the above-described functions.

With respect to the devices in the above embodiments, the specific manners for performing operations for individual modules therein have been described in detail in the embodiments regarding the methods, which will not be elaborated herein.

An exemplary embodiment of the present disclosure also provides an apparatus for accessing a wireless access point, which may achieve the method for accessing a wireless access point provided by the present disclosure. The apparatus for accessing a wireless access point includes: a processor; and a memory for storing instructions executable by the processor.

The processor is configured to:
receive access information of the wireless access point broadcasted by a preset device, the access information including a Basic Service Set Identifier (BSSID) and an access password of the wireless access point, and the preset device being a device having successfully accessed the wireless access point;
unicast device finding information according to the BSSID, the device finding information carrying therein the BSSID;
receive feedback information sent by the wireless access point, the feedback information carrying therein an original Service Set Identifier (SSID) of the wireless access point; and
access the wireless access point according to the original SSID carried in the feedback information and the access password.

An exemplary embodiment of the present disclosure also provides an apparatus for accessing a wireless access point, which may achieve the method for accessing a wireless access point provided by the present disclosure. The apparatus for accessing a wireless access point includes: a processor; and a memory for storing instructions executable by the processor.

The processor is configured to:
access a wireless access point; and
broadcast access information of the wireless access point, the access information including a Basic Service Set Identifier (BSSID) and an access password of the wireless access point, and the BSSID and the access password being configured for instructing a smart device to access the wireless access point.

Fig. 9 is a block diagram illustrating an apparatus for accessing a wireless access point, according to an exemplary embodiment. For example, the device 900 may be implemented as the preset device 120 or the smart device 140 in the implementation environment shown in Fig. 1.

Referring to Fig. 9, the device 900 may include one or more of the following components: a processing component 902, a memory 904, a power component 906, a multimedia component 909, an audio component 910, an input/output (I/O) interface 912, a sensor component 914, and a communication component 916.

The processing component 902 typically controls overall operations of the device 900, such as the operations associated with display, data communications, camera operations, and recording operations. The processing component 902 may include one or more processors 918 to execute instructions to perform all or part of the steps in the above described methods. Moreover, the processing component 902 may include one or more modules which facilitate the interaction between the processing component 902 and other components. For instance, the processing component 902 may include a multimedia module to facilitate the interaction between the multimedia component 909 and the processing component 902.

The memory 904 is configured to store various types of data to support the operation of the device 900. Examples of such data include instructions for any applications or methods operated on the device 900, messages, pictures, video, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the device 900. The power component 906 may include a power management system, one or more power sources, and any other components associated with the generation, management, and distribution of power in the device 900.

The multimedia component 909 includes a screen providing an output interface between the device 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action.

The audio component 910 is configured to output and/or input audio signals. For example, the audio component 910 includes a microphone ("MIC") configured to receive an external audio signal when the device 900 is in an operation mode, such as a call mode, a recording mode, and a voice recognition mode. The received audio signal may be further stored in the memory 904 or transmitted via the communication component 916. In some embodiments, the audio component 910 further includes a speaker to output audio signals.

The I/O interface 912 provides an interface between the processing component 902 and peripheral interface modules, such as a keyboard, a click wheel, buttons, stereos, and the like. The buttons may include, but are not limited to, a home button, a volume button, a starting button, and a locking button.

The sensor component 914 includes one or more sensors to provide status assessments of various aspects of the device 900. For instance, the sensor component 914 may detect an open/closed status of the device 900, relative positioning of components, e.g., the display , of the device 900, a change in position of the device 900 or a component of the device 900, a presence or absence of user contact with the device 900, an orientation or an acceleration/deceleration of the device 900, and a change in temperature of the device 900. The sensor component 914 may include a proximity sensor configured to detect the presence of nearby objects without any physical contact. The sensor component 914 may also include a light sensor, such as a CMOS or CCD image sensor, for use in imaging applications. In some embodiments, the sensor component 914 may also include an accelerometer sensor, a gyroscope sensor, a magnetic sensor, a pressure sensor, or a temperature sensor.

The communication component 916 is configured to facilitate communication, wired or wirelessly, between the device 900 and other devices. The device 900 can access a wireless network based on a communication standard, such as WiFi, 2G, or 3G, or a combination thereof. In one exemplary embodiment, the communication component 916 receives a unicasting signal or unicasting associated information from an external unicasting management system via a unicasting channel. In one exemplary embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods for accessing a wireless access point.

In exemplary embodiments, there is also provided a non-transitory computer-readable storage medium including instructions, such as included in the memory 904, executable by the processor 918 in the device 900, for performing the above-described methods for accessing a wireless access point. For example, the non-transitory computer-readable storage medium may be a ROM, a RAM, a CD-ROM, a magnetic tape, a floppy disc, an optical data storage device, and the like.

## Claims

1. A method executed by a system for accessing a wireless access point (160), the system comprising a preset device (120), a smart device (140) and the wireless access point (160); the method comprising:
the preset device (120) successfully accessing the wireless access point (160);
the preset device (120) broadcasting (302, 403) access information of the wireless access point (160), the access information including a Basic Service Set Identifier, BSSID, an access password of the wireless access point (160) and a Service Set Identifier, SSID, of the wireless access point (160);
the smart device (140) receiving (201, 404) the access information of the wireless access point (160) broadcasted by the preset device (120);
the smart device (140) detecting (410) whether the SSID in the access information contains a preset character, the preset character being a character having different coding formats; and
when the preset character is contained:
the smart device (140) unicasting (202) to the wireless access point (160) device finding information according to the BSSID, the device finding information carrying therein the BSSID;
the smart device (140) receiving (203) feedback information sent by the wireless access point (160), the feedback information carrying therein an original SSID of the wireless access point (160); and
the smart device (140) accessing (204, 409) the wireless access point (160) according to the original SSID carried in the feedback information and the access password.

2. The method of claim 1, wherein the unicasting (202) the device finding information according to the BSSID comprises:
unicasting (405) a probe request carrying the BSSID.

3. The method of claim 1 or 2, wherein the receiving (203) the feedback information sent by the wireless access point (160) comprises:
receiving (408) a probe response sent by the wireless access point (160).

4. A method executed by a system for accessing a wireless access point (160), the system comprising a preset device (120), a smart device (140) and the wireless access point (160); the method comprising:
the preset device (120) successfully accessing (301) the wireless access point (160);
the preset device (120) detecting (402) whether a Service Set Identifier, SSID, of the wireless access point (160) contains a preset character, the preset character being a character having different coding formats; and
when the preset character is contained:
the preset device (120) broadcasting (302, 403) access information of the wireless access point (160), the access information including a Basic Service Set Identifier, BSSID, and an access password of the wireless access point (160), and the BSSID and the access password being configured for instructing the smart device (140) to access the wireless access point (160);
the smart device (140) receiving (201, 404) the access information of the wireless access point (160) broadcasted by the preset device (120);
the smart device (140) unicasting (202) to the wireless access point (160) device finding information according to the BSSID, the device finding information carrying therein the BSSID;
the smart device (140) receiving (203) feedback information sent by the wireless access point (160), the feedback information carrying therein an original SSID of the wireless access point (160); and
the smart device (140) accessing (204, 409) the wireless access point (160) according to the original SSID carried in the feedback information and the access password.

5. A system for accessing a wireless access point (160), the system comprising a preset device (120), a smart device (140) and the wireless access point (160);
the preset device (120) comprising:
a broadcasting module (720, 820) configured to, when the preset device (120) has successfully accessed the wireless access point (160), broadcast access information of the wireless access point (160), the access information including a Basic Service Set Identifier, BSSID, an access password of the wireless access point (160) and a Service Set Identifier, SSID, of the wireless access point (160);
the smart device (140) comprising:
a first receiving module (510, 610) configured to receive access information of the wireless access point (160) broadcasted by the preset device (120);
a detection module (650) configured to detect whether the SSID in the access information received by the first receiving module (510, 610) contains a preset character, the preset character being a character having different coding formats;
a unicasting module (520, 620) configured to, when a detection result of the detection module (650) is that the preset character is contained, unicast to the wireless access point (160) device finding information according to the BSSID in the access information received by the first receiving module (510, 610), the device finding information carrying therein the BSSID;
a second receiving module (530, 630) configured to receive feedback information sent by the wireless access point (160), the feedback information carrying therein an original SSID of the wireless access point (160); and
an access module (540, 640) configured to access the wireless access point (160) according to the original SSID carried in the feedback information received by the second receiving module (530, 630) and the access password in the access information received by the first receiving module (510, 610).

6. The system of claim 5, wherein the unicasting module (520, 620) is further configured to unicast a probe request carrying the BSSID.

7. The system of claim 5 or 6, wherein the second receiving module (530, 630) is further configured to receive a probe response broadcasted by the wireless access point (160).

8. A system for accessing a wireless access point (160), the system comprising a preset device (120), a smart device (140) and the wireless access point (160);
the preset device (120) comprising:
an access module (710, 810) configured to access the wireless access point (160);
a detection module (830) configured to detect whether a Service Set Identifier, SSID, of the wireless access point (160) contains a preset character, the preset character being a character having different coding formats; and
a broadcasting module (720, 820) configured to, when a detection result of the detection module (830) is that the preset character is contained, broadcast access information of the wireless access point (160), the access information including a Basic Service Set Identifier, BSSID, and an access password of the wireless access point (160), and the BSSID and the access password being configured for instructing the smart device (140) to access the wireless access point (160);
the smart device (140) comprising:
a first receiving module (510, 610) configured to receive access information of the wireless access point (160) broadcasted by the preset device (120);
a unicasting module (520, 620) configured to unicast to the wireless access point (160) device finding information according to the BSSID in the access information received by the first receiving module (510, 610), the device finding information carrying therein the BSSID;
a second receiving module (530, 630) configured to receive feedback information sent by the wireless access point (160), the feedback information carrying therein an original SSID of the wireless access point (160); and
an access module (540, 640) configured to access the wireless access point (160) according to the original SSID carried in the feedback information received by the second receiving module (530, 630) and the access password in the access information received by the first receiving module (510, 610).

9. A computer program comprising instructions, which when the program is executed by one or more processors of a system for accessing a wireless access point (160), cause the system to perform a method according to any one of claims 1 to 4.

## Patentansprüche

1. Verfahren, das von einem System ausgeführt wird, um auf einen drahtlosen Zugangspunkt (160) zuzugreifen, wobei das System eine voreingestellte Vorrichtung (120), eine Smart-Vorrichtung (140) und den drahtlosen Zugangspunkt (160) umfasst; wobei das Verfahren umfasst:
erfolgreiches Zugreifen der voreingestellten Vorrichtung (120) auf den drahtlosen Zugangspunkt (160);
Broadcasten (302, 403) von Zugangsinformationen des drahtlosen Zugangspunkts (160) durch die voreingestellte Vorrichtung (120), wobei die Zugangsinformationen einen Basic Service Set Identifier, BSSID, ein Zugangskennwort des drahtlosen Zugangspunkts (160) und einen Service Set Identifier, SSID, des drahtlosen Zugangspunkts (160) einschließen;
Empfangen (201, 404) der von der voreingestellten Vorrichtung (120) gebroadcasteten Zugangsinformationen des drahtlosen Zugangspunkts (160) durch die Smart-Vorrichtung (140);
Erkennen (410) durch die Smart-Vorrichtung (140), ob der SSID in den Zugangsinformationen ein voreingestelltes Zeichen enthält, wobei es sich bei dem voreingestellten Zeichen um ein Zeichen handelt, das unterschiedliche Codierungsformate aufweist; und
wenn das voreingestellte Zeichen enthalten ist:
Unicasten (202) von Vorrichtungssuchinformationen gemäß dem BSSID durch die Smart-Vorrichtung (140) an den drahtlosen Zugangspunkt (160), wobei die Vorrichtungssuchinformationen darin den BSSID übermitteln;
Empfangen (203) von Rückkopplungsinformationen, die vom drahtlosen Zugangspunkt (160) gesendet werden, durch die Smart-Vorrichtung (140), wobei die Rückkopplungsinformationen darin einen ursprünglichen SSID des drahtlosen Zugangspunkts (160) übermitteln; und
Zugreifen (204, 409) der Smart-Vorrichtung (140) auf den drahtlosen Zugangspunkt (160) gemäß dem in den Rückkopplungsinformationen übermittelten ursprünglichen SSID und dem Zugangskennwort.

2. Verfahren nach Anspruch 1, wobei das Unicasten (202) der Vorrichtungssuchinformationen gemäß dem BSSID umfasst:
Unicasten (405) einer Anforderungsabfrage, die den BSSID übermittelt.

3. Verfahren nach Anspruch 1 oder 2, wobei das Empfangen (203) der vom drahtlosen Zugangspunkt (160) gesendeten Rückkopplungsinformationen umfasst:
Empfangen (408) einer Anforderungsantwort, die vom drahtlosen Zugangspunkt (160) gesendet wird.

4. Verfahren, das von einem System ausgeführt wird, um auf einen drahtlosen Zugangspunkt (160) zuzugreifen, wobei das System eine voreingestellte Vorrichtung (120), eine Smart-Vorrichtung (140) und den drahtlosen Zugangspunkt (160) umfasst; wobei das Verfahren umfasst:
erfolgreiches Zugreifen (301) der voreingestellten Vorrichtung (120) auf den drahtlosen Zugangspunkt (160);
Erkennen (402) durch die voreingestellte Vorrichtung (120), ob ein Service Set Identifier, SSID, des drahtlosen Zugangspunkts (160) ein voreingestelltes Zeichen enthält, wobei es sich bei dem voreingestellten Zeichen um ein Zeichen handelt, das unterschiedliche Codierungsformate aufweist; und
wenn das voreingestellte Zeichen enthalten ist:
Broadcasten (302, 403) von Zugangsinformationen des drahtlosen Zugangspunkts (160) durch die voreingestellte Vorrichtung (120), wobei die Zugangsinformationen einen Basic Service Set Identifier, BSSID, und ein Zugangskennwort des drahtlosen Zugangspunkts (160) einschließen und der BSSID und das Zugangskennwort dazu konfiguriert sind, die Smart-Vorrichtung (140) anzuweisen, auf den drahtlosen Zugangspunkt (160) zuzugreifen;
Empfangen (201, 404) der von der voreingestellten Vorrichtung (120) gebroadcasteten Zugangsinformationen des drahtlosen Zugangspunkts (160) durch die Smart-Vorrichtung (140);
Unicasten (202) von Vorrichtungssuchinformationen gemäß dem BSSID durch die Smart-Vorrichtung (140) an den drahtlosen Zugangspunkt (160), wobei die Vorrichtungssuchinformationen darin den BSSID übermitteln;
Empfangen (203) von Rückkopplungsinformationen, die vom drahtlosen Zugangspunkt (160) gesendet werden, durch die Smart-Vorrichtung (140), wobei die Rückkopplungsinformationen darin einen ursprünglichen SSID des drahtlosen Zugangspunkts (160) übermitteln; und
Zugreifen (204, 409) der Smart-Vorrichtung (140) auf den drahtlosen Zugangspunkt (160) gemäß dem in den Rückkopplungsinformationen übermittelten ursprünglichen SSID und dem Zugangskennwort.

5. System, um auf einen drahtlosen Zugangspunkt (160) zuzugreifen, wobei das System eine voreingestellte Vorrichtung (120), eine Smart-Vorrichtung (140) und den drahtlosen Zugangspunkt (160) umfasst;
wobei die voreingestellte Vorrichtung (120) umfasst:
ein Broadcast-Modul (720, 820), das dazu konfiguriert ist, wenn die voreingestellte Vorrichtung (120) erfolgreich auf den drahtlosen Zugangspunkt (160) zugegriffen hat, Zugangsinformationen des drahtlosen Zugangspunkts (160) zu broadcasten, wobei die Zugangsinformationen einen Basic Service Set Identifier, BSSID, ein Zugangskennwort des drahtlosen Zugangspunkts (160) und einen Service Set Identifier, SSID, des drahtlosen Zugangspunkts (160) einschließen;
wobei die Smart-Vorrichtung (140) umfasst:
ein erstes Empfangsmodul (510, 610), das dazu konfiguriert ist, Zugangsinformationen des drahtlosen Zugangspunkts (160), die von der voreingestellten Vorrichtung (120) gebroadcastet werden, zu empfangen;
ein Erkennungsmodul (650), das dazu konfiguriert ist, zu erkennen, ob der SSID in den vom ersten Empfangsmodul (510, 610) empfangenen Zugangsinformationen ein voreingestelltes Zeichen enthält, wobei es sich bei dem voreingestellten Zeichen um ein Zeichen handelt, das unterschiedliche Codierungsformate aufweist;
ein Unicast-Modul (520, 620), das dazu konfiguriert ist, wenn ein Erkennungsergebnis des Erkennungsmoduls (650) lautet, dass das voreingestellte Zeichen enthalten ist, Vorrichtungssuchinformationen gemäß dem BSSID in den vom ersten Empfangsmodul (510, 610) empfangenen Zugangsinformationen an den drahtlosen Zugangspunkt (160) zu unicasten, wobei die Vorrichtungssuchinformationen darin den BSSID übermitteln;
ein zweites Empfangsmodul (530, 630), das dazu konfiguriert ist, Rückkopplungsinformationen zu empfangen, die vom drahtlosen Zugangspunkt (160) gesendet werden, wobei die Rückkopplungsinformationen darin einen ursprünglichen SSID des drahtlosen Zugangspunkts (160) übermitteln; und
ein Zugriffsmodul (540, 640), das dazu konfiguriert ist, gemäß dem ursprünglichen SSID, der in den vom zweiten Empfangsmodul (530, 630) empfangenen Rückkopplungsinformationen übermittelt wird, und dem Zugangskennwort in den vom ersten Empfangsmodul (510, 610) empfangenen Zugangsinformationen auf den drahtlosen Zugangspunkt (160) zuzugreifen.

6. System nach Anspruch 5, wobei das Unicast-Modul (520, 620) weiter dazu konfiguriert ist, eine Anforderungsabfrage zu unicasten, die den BSSID übermittelt.

7. System nach Anspruch 5 oder 6, wobei das zweite Empfangsmodul (530, 630) weiter dazu konfiguriert ist, eine Anforderungsantwort zu empfangen, die vom drahtlosen Zugangspunkt (160) gebroadcastet wird.

8. System, um auf einen drahtlosen Zugangspunkt (160) zuzugreifen, wobei das System eine voreingestellte Vorrichtung (120), eine Smart-Vorrichtung (140) und den drahtlosen Zugangspunkt (160) umfasst;
wobei die voreingestellte Vorrichtung (120) umfasst:
ein Zugriffsmodul (710, 810), das dazu konfiguriert ist, auf den drahtlosen Zugangspunkt (160) zuzugreifen;
ein Erkennungsmodul (830), das dazu konfiguriert ist, zu erkennen, ob ein Service Set Identifier, SSID, des drahtlosen Zugangspunkts (160) ein voreingestelltes Zeichen enthält, wobei es sich bei dem voreingestellten Zeichen um ein Zeichen handelt, das unterschiedliche Codierungsformate aufweist; und
ein Broadcast-Modul (720, 820), das dazu konfiguriert ist, wenn ein Erkennungsergebnis des Erkennungsmoduls (830) lautet, dass das voreingestellte Zeichen enthalten ist, Zugangsinformationen des drahtlosen Zugangspunkts (160) zu broadcasten, wobei die Zugangsinformationen einen Basic Service Set Identifier, BSSID, und ein Zugangskennwort des drahtlosen Zugangspunkts (160) einschließen und der BSSID und das Zugangskennwort dazu konfiguriert sind, die Smart-Vorrichtung (140) anzuweisen, auf den drahtlosen Zugangspunkt (160) zuzugreifen;
wobei die Smart-Vorrichtung (140) umfasst:
ein erstes Empfangsmodul (510, 610), das dazu konfiguriert ist, Zugangsinformationen des drahtlosen Zugangspunkts (160), die von der voreingestellten Vorrichtung (120) gebroadcastet werden, zu empfangen;
ein Unicast-Modul (520, 620), das dazu konfiguriert ist, Vorrichtungssuchinformationen gemäß dem BSSID in den vom ersten Empfangsmodul (510, 610) empfangenen Zugangsinformationen an den drahtlosen Zugangspunkt (160) zu unicasten, wobei die Vorrichtungssuchinformationen darin den BSSID übermitteln;
ein zweites Empfangsmodul (530, 630), das dazu konfiguriert ist, Rückkopplungsinformationen zu empfangen, die vom drahtlosen Zugangspunkt (160) gesendet werden, wobei die Rückkopplungsinformationen darin einen ursprünglichen SSID des drahtlosen Zugangspunkts (160) übermitteln; und
ein Zugriffsmodul (540, 640), das dazu konfiguriert ist, gemäß dem ursprünglichen SSID, der in den vom zweiten Empfangsmodul (530, 630) empfangenen Rückkopplungsinformationen übermittelt wird, und dem Zugangskennwort in den vom ersten Empfangsmodul (510, 610) empfangenen Zugangsinformationen auf den drahtlosen Zugangspunkt (160) zuzugreifen.

9. Computerprogramm, das Anweisungen umfasst, die, wenn das Programm von einem oder mehreren Prozessoren eines Systems ausgeführt wird, um auf einen drahtlosen Zugangspunkt (160) zuzugreifen, das System dazu bringen, ein Verfahren nach einem der Ansprüche 1 bis 4 durchzuführen.

## Revendications

1. Procédé exécuté par un système pour accéder à un point d'accès sans fil (160), le système comprenant un dispositif prédéfini (120), un dispositif intelligent (140) et le point d'accès sans fil (160) ; le procédé comprenant :
l'accès réussi par le dispositif prédéfini (120) au point d'accès sans fil (160) ;
la diffusion (302, 403) par le dispositif prédéfini (120) d'informations d'accès du point d'accès sans fil (160), les informations d'accès incluant un identificateur d'ensemble de services de base, BSSID, un mot de passe d'accès du point d'accès sans fil (160) et un identificateur d'ensemble de services, SSID, du point d'accès sans fil (160) ;
la réception (201, 404) par le dispositif intelligent (140) des informations d'accès du point d'accès sans fil (160) diffusées par le dispositif prédéfini (120) ;
la détection (410) par le dispositif intelligent (140) si le SSID dans les informations d'accès contient un caractère prédéfini, le caractère prédéfini étant un caractère ayant des formats de codage différents ; et
quand le caractère prédéfini est contenu :
la monodiffusion (202) par le dispositif intelligent (140) au point d'accès sans fil (160) d'informations de découverte de dispositif en fonction du BSSID, les informations de découverte de dispositif transportant dans celles-ci le BSSID ;
la réception (203) par le dispositif intelligent (140) d'informations de rétroaction envoyées par le point d'accès sans fil (160), les informations de rétroaction transportant dans celles-ci un SSID original du point d'accès sans fil (160) ; et
l'accès (204, 409) par le dispositif intelligent (140) au point d'accès sans fil (160) en fonction du SSID original transporté dans les informations de rétroaction et du mot de passe d'accès.

2. Procédé selon la revendication 1, dans lequel la monodiffusion (202) des informations de découverte de dispositif en fonction du BSSID comprend :
la monodiffusion (405) d'une demande de sondage transportant le BSSID.

3. Procédé selon la revendication 1 ou 2, dans lequel la réception (203) des informations de rétroaction envoyées par le point d'accès sans fil (160) comprend :
la réception (408) d'une réponse de sondage envoyée par le point d'accès sans fil (160).

4. Procédé exécuté par un système pour accéder à un point d'accès sans fil (160), le système comprenant un dispositif prédéfini (120), un dispositif intelligent (140) et le point d'accès sans fil (160) ; le procédé comprenant :
l'accès réussi (301) par le dispositif prédéfini (120) au point d'accès sans fil (160) ;
la détection (402) par le dispositif prédéfini (120) si un identificateur d'ensemble de services, SSID, du point d'accès sans fil (160) contient un caractère prédéfini, le caractère prédéfini étant un caractère ayant des formats de codage différents ; et
quand le caractère prédéfini est contenu :
la diffusion (302, 403) par le dispositif prédéfini (120) d'informations d'accès du point d'accès sans fil (160), les informations d'accès incluant un identificateur d'ensemble de services de base, BSSID, et un mot de passe d'accès du point d'accès sans fil (160), et le BSSID et le mot de passe d'accès étant configurés pour donner instruction au dispositif intelligent (140) d'accéder au point d'accès sans fil (160) ;
la réception (201, 404) par le dispositif intelligent (140) des informations d'accès du point d'accès sans fil (160) diffusées par le dispositif prédéfini (120) ;
la monodiffusion (202) par le dispositif intelligent (140) au point d'accès sans fil (160) d'informations de découverte de dispositif en fonction du BSSID, les informations de découverte de dispositif transportant dans celles-ci le BSSID ;
la réception (203) par le dispositif intelligent (140) d'informations de rétroaction envoyées par le point d'accès sans fil (160), les informations de rétroaction transportant dans celles-ci un SSID original du point d'accès sans fil (160) ; et
l'accès (204, 409) par le dispositif intelligent (140) au point d'accès sans fil (160) en fonction du SSID original transporté dans les informations de rétroaction et du mot de passe d'accès.

5. Système pour accéder à un point d'accès sans fil (160), le système comprenant un dispositif prédéfini (120), un dispositif intelligent (140) et le point d'accès sans fil (160) ;
le dispositif prédéfini (120) comprenant :
un module de diffusion (720, 820) configuré pour, quand le dispositif prédéfini (120) a accédé avec succès au point d'accès sans fil (160), diffuser des informations d'accès du point d'accès sans fil (160), les informations d'accès incluant un identificateur d'ensemble de services de base, BSSID, un mot de passe d'accès du point d'accès sans fil (160) et un identificateur d'ensemble de services, SSID, du point d'accès sans fil (160) ;
le dispositif intelligent (140) comprenant :
un premier module de réception (510, 610) configuré pour recevoir des informations d'accès du point d'accès sans fil (160) diffusées par le dispositif prédéfini (120) ;
un module de détection (650) configuré pour détecter si le SSID dans les informations d'accès reçues par le premier module de réception (510, 610) contient un caractère prédéfini, le caractère prédéfini étant un caractère ayant des formats de codage différents ;
un module de monodiffusion (520, 620) configuré pour, quand un résultat de détection du module de détection (650) est que le caractère prédéfini est contenu, diffuser par monodiffusion au point d'accès sans fil (160) des informations de découverte de dispositif en fonction du BSSID dans les informations d'accès reçues par le premier module de réception (510, 610), les informations de découverte de dispositif transportant dans celles-ci le BSSID ;
un second module de réception (530, 630) configuré pour recevoir des informations de rétroaction envoyées par le point d'accès sans fil (160), les informations de rétroaction transportant dans celles-ci un SSID original du point d'accès sans fil (160) ; et
un module d'accès (540, 640) configuré pour accéder au point d'accès sans fil (160) en fonction du SSID original transporté dans les informations de rétroaction reçues par le second module de réception (530, 630) et du mot de passe d'accès dans les informations d'accès reçues par le premier module de réception (510, 610).

6. Système selon la revendication 5, dans lequel le module de monodiffusion (520, 620) est configuré en outre pour diffuser par monodiffusion une demande de sondage transportant le BSSID.

7. Système selon la revendication 5 ou 6, dans lequel le second module de réception (530, 630) est configuré en outre pour recevoir une réponse de sondage envoyé par le point d'accès sans fil (160).

8. Système pour accéder à un point d'accès sans fil (160), le système comprenant un dispositif prédéfini (120), un dispositif intelligent (140) et le point d'accès sans fil (160) ;
le dispositif prédéfini (120) comprenant :
un module d'accès (710, 810) configuré pour accéder au point d'accès sans fil (160) ;
un module de détection (830) configuré pour détecter si un identificateur d'ensemble de services, SSID, du point d'accès sans fil (160) contient un caractère prédéfini, le caractère prédéfini étant un caractère ayant des formats de codage différents ; et
un module de diffusion (720, 820) configuré pour, quand un résultat de détection du module de détection (830) est que le caractère prédéfini est contenu, diffuser des informations d'accès du point d'accès sans fil (160), les informations d'accès incluant un identificateur d'ensemble de services de base, BSSID, et un mot de passe d'accès du point d'accès sans fil (160), et le BSSID et le mot de passe d'accès étant configurés pour donner instruction au dispositif intelligent (140) d'accéder au point d'accès sans fil (160) ;
le dispositif intelligent (140) comprenant :
un premier module de réception (510, 610) configuré pour recevoir des informations d'accès du point d'accès sans fil (160) diffusées par le dispositif prédéfini (120) ;
un module de monodiffusion (520, 620) configuré pour diffuser par monodiffusion au point d'accès sans fil (160) des informations de découverte de dispositif en fonction du BSSID dans les informations d'accès reçues par le premier module de réception (510, 610), les informations de découverte de dispositif transportant dans celles-ci le BSSID ;
un second module de réception (530, 630) configuré pour recevoir des informations de rétroaction envoyées par le point d'accès sans fil (160), les informations de rétroaction transportant dans celles-ci un SSID original du point d'accès sans fil (160) ; et
un module d'accès (540, 640) configuré pour accéder au point d'accès sans fil (160) en fonction du SSID original transporté dans les informations de rétroaction reçues par le second module de réception (530, 630) et du mot de passe d'accès dans les informations d'accès reçues par le premier module de réception (510, 610).

9. Programme informatique comprenant des instructions qui, quand le programme est exécuté par un ou plusieurs processeurs d'un système pour accéder à un point d'accès sans fil (160), amènent le système à effectuer un procédé selon l'une quelconque des revendications 1 à 4.
